# EUROPEAN PATENT SPECIFICATION

(11) **EP 2 947 351 B1**
(45) Date of publication and mention of the grant of the patent: **11.03.2020**
(21) Application number: 14740555.9
(22) Date of filing: 17.01.2014
(51) Int. Cl.: F16H 57/03, H02K 7/06, F16H 25/22, F16H 25/20

(54) **ELECTRIC LINEAR ACTUATOR**
ELEKTRISCHER LINEARANTRIEB
ACTIONNEUR LINÉAIRE ÉLECTRIQUE

(30) Priority: 18.01.2013 JP 2013007092
(43) Date of publication of application: 25.11.2015
(73) Proprietor: NTN Corporation, Osaka-shi, Osaka 550-0003 (JP)
(72) Inventor: FUNADA, Kensuke, Iwata-shi Shizuoka 438-8510 (JP)
(74) Representative: Cohausz & Florack
(86) International application number: PCT/JP2014/050848
(87) International publication number: WO 2014/112602

(56) References cited:
- JP-A- H0 571 615
- JP-A- H0 571 615
- JP-A- H0 989 086
- JP-A- H05 141 506
- JP-A- H09 303 514
- JP-A- 2000 018 361
- JP-A- 2005 329 912
- JP-A- 2009 216 118
- JP-A- 2010 007 699
- JP-A- 2011 117 513
- JP-A- 2012 112 442
- JP-A- 2012 125 044
- JP-A- 2012 125 044
- US-A- 2 403 092
- US-A1- 2012 247 240

## Description

### Field of the Invention

The present invention relates to an electric actuator provided with a ball screw mechanism used in motors in general industries and driving sections of automobiles etc., and more particularly to an electric linear actuator used in a transmission or a parking brake of automobiles for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly size of electric motor and power consumption are increased. Thus, the ball screw mechanisms have been widely used as more efficient actuators.

In an electric linear actuator of the prior art, an output member can be axially displaced by rotating a nut forming a ball screw by an electric motor supported on a housing of the actuator and axially driving a ball screw shaft inserted into the nut. In usual, since friction of the ball screw mechanism is very low, and the nut can be easily rotated by a thrust load applied to the output-side member, it is necessary to hold the position of the output member when the electric motor is stopped.

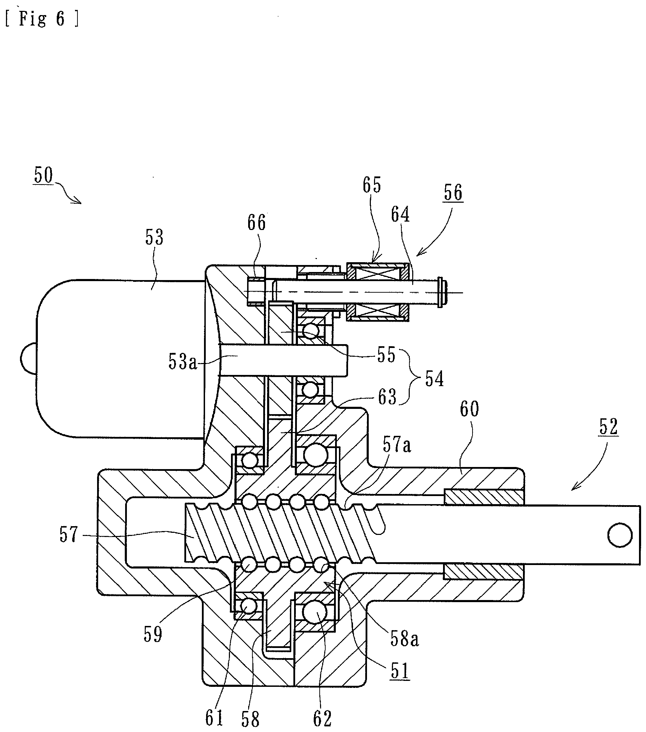

Accordingly, it has been developed an electric linear actuator in which a brake means for an electric motor is arranged or a low efficient means such as a worm gear is provided as a power transmitting means. One representative example of the electric linear actuator is shown in Fig. 6 and this electric linear actuator 50 comprises an actuator main body 52 having a ball screw 51 for converting the rotational motion to the linear motion, a gear reduction mechanism 54 for transmitting the rotational motion of the motor 53 to the actuator main body 52, and a position holding mechanism 56 for holding the position of the actuator main body 52 with engaging with a first gear 55 forming the gear reduction mechanism 54.

The ball screw 51 comprises a screw shaft 57 as an output shaft formed on its outer circumference with a helical screw groove 57a, a nut 58 formed on its inner circumference with a helical screw groove 58a and adapted to be inserted onto the screw shaft 57, a large number of balls 59 rollably contained in a rolling passage formed between the screw grooves 57a, 58a arranged oppositely each other.

In the actuator main body 52, the nut 58 is rotationally supported by a pair of ball bearings 61 and 62 and the screw shaft 57 is supported axially movably but not rotationally relative to the housing 60. The screw shaft 57 can be linearly moved when the nut 58 is rotated via the gear reduction mechanism 54.

The gear reduction mechanism 54 comprises a first gear 55 formed of smaller spur gear secured on a motor shaft 53a of the electric motor 53, and a second gear 63 formed of larger spur gear integrally formed on the outer circumference of the nut 58.

The position holding mechanism 56 comprises a shaft 64 as a lock member being able to engage the first gear 55, and a solenoid 65 as a driving means for driving the shaft 64 to engage and disengage the shaft 64 with the first gear 55. The shaft 64 is made as a bar member and is linearly driven by solenoid 65. The tip end of the shaft 64 is adapted to be engaged with a receiving part 66. Since rotation of the first gear 55 can be firmly stopped with the shaft 64 being engaged with the first gear 55 by actuating the solenoid 65, it is possible to stably hold the position of the screw shaft 57 of the actuator main body 52 without any slippage therebetween (see e.g. Patent Document 1 below).

### Document of the Prior Art

### Patent Document

Patent Document 1: JP 2009 -156416 A

### Disclosure of the Invention

### Problems to be solved by the Invention

In the electric linear actuator 50 of the prior art, the gear reduction mechanism 54 and the ball screw 51 are contained within a two-piece type housing 60 and the rotational power of the electric motor 53 mounted outside the housing 60 is transmitted to the ball screw 51 via the gear reduction mechanism 54 and the nut 58 to convert the rotational power of the electric motor 53 to the linear motion of the screw shaft 57.

In the electric linear actuator 50 for an automobile of this kind, driving parts such as the ball screw 51 is contained within the housing 60 to prevent entering of muddy water or oil and scattering of grease contained in the housing 60. Accordingly, the housing 60 should withstand a load received from the driving parts.

For example, the housing is required not only to have sufficient strength not to be damaged when the screw shaft 57 collides with the bottom of the housing 60 but also to have desirable strength and durability not to cause deformation of fitting surfaces of the housing 60 and adverse influence to sealability thereof. JP 2005 329912 A can be considered as closest prior art and discloses an electric power steering device. US 2 403 092 A describes a linear actuator.

It is, therefore, an object of the present invention to provide an electric linear actuator intended to reduce weight of the housing and to improve durability of the housing with increasing the strength against load applied to the housing.

### Means for solving the Problems

For achieving the object of the present invention, there is provided an electric linear actuator according to claim 1.

According to the present invention of claim 1, since it comprises a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by rolling bearings mounted on the housing rotationally but axially immovably, and a screw shaft coaxially integrated with the driving shaft, formed with a helical screw groove on its outer circumference corresponding to the helical screw groove of the nut, inserted into the nut via a large number of balls, and supported axially movably but not rotationally, wherein the housing comprises a first housing on which the electric motor is mounted and a second housing to be abutted against an end face of the first housing, wherein at least one of the first and second housings is formed with ribs extending from each of securing portions arranged on the periphery of the housing through which fastening bolts are inserted to a containing portion for containing the screw shaft, wherein the securing portions partially project radially outward from the periphery of said at least one of the first and second housings and accommodate the fastening bolts, and wherein the height of each rib arcuately varies from the securing portion toward the containing portion of said at least one of the first and second housings so that the tangential inclination of the arcuate rib becomes gradually gentle toward the containing portion, characterized in that the radially outermost end of each rib is set at a position radially outer than the bolt pitch circle diameter of the fastening bolts, it is possible to provide an electric linear actuator which can improve the strength and rigidity of the housing with reducing weight of the housing and thus improve durability of the housing and also can prevent deformation of fitting surfaces of the housing to improve the sealability thereof.

It is preferable as defined in claim 2 that the housing is formed of aluminum alloy die-cast. This makes it possible to improve the mass productivity, reduce the manufacturing cost, and amount of aluminum usage with increasing the strength and thus reducing the weight of the housing.

As defined in claim 1, the height of each rib arcuately varies from the securing portion toward the containing portion (cylindrical portion) of the housing so that the tangential inclination of the arcuate rib becomes gradually gentle toward the containing portion (cylindrical portion). According to this structure, since the ribs can help to support the load applied to the containing portion which is the most weak portion, it is possible to contribute to safety design of the most weak portion (containing portion) and thus to improve the durability of the electric linear actuator with increasing the strength against the load applied to the most weak portion.

As defined in claim 1, the radially outermost end of each rib is set at a position radially outer than the bolt pitch circle diameter (B.C.D) of the fastening bolts. This makes it possible to suppress stress concentration which would be caused by a bending moment applied to the housing and thus to further improve the durability with increasing the strength and rigidity of the housing.

It is preferable as defined in claim 3 that each rib comprises a plurality of thin walled ribs. This makes it possible to prevent generation of air bubbles in a molded body during die casting process and to reduce the weight of the housing without reduce the strength of the housing with and also possible to achieve smooth circulation of mold lubricant during molding and thus to improve the productivity.

It is also preferable as defined in claim 4 that each rib comprises a pair of ribs and the distance therebetween varies so that it gradually increases toward the containing portion. This makes it possible to further improve the strength and rigidity of the housing.

It is preferable as defined in claim 5 that the driving shaft is formed integrally with the screw shaft, a radially extending engaging pin is mounted on one end of the driving shaft, a guide member having axially extending guide grooves is mounted within a blind bore of the housing, and the engaging pin is engaged with the guide grooves. This makes it possible that the screw shaft is supported axially movably but not rotationally.

### Effects of the Invention

According to the electric linear actuator of the present invention, since it comprises an electric linear actuator comprising a housing; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by rolling bearings mounted on the housing rotationally but axially immovably, and a screw shaft coaxially integrated with the driving shaft, formed with a helical screw groove on its outer circumference corresponding to the helical screw groove of the nut, inserted into the nut via a large number of balls, and supported axially movably but not rotationally, wherein the housing comprises a first housing on which the electric motor is mounted and a second housing to be abutted against an end face of the first housing, wherein at least one of the first and second housings is formed with ribs extending from each of securing portions arranged on the periphery of the housing through which fastening bolts are inserted to a containing portion for containing the screw shaft, wherein the securing portions partially project radially outward from the periphery of said at least one of the first and second housings and accommodate the fastening bolts, and wherein the height of each rib arcuately varies from the securing portion toward the containing portion of said at least one of the first and second housings so that the tangential inclination of the arcuate rib becomes gradually gentle toward the containing portion, characterized in that the radially outermost end of each rib is set at a position radially outer than the bolt pitch circle diameter of the fastening bolts, it is possible to provide an electric linear actuator which can improve the strength and rigidity of the housing with reducing weight of the housing and thus improve durability of the housing and also can prevent deformation of fitting surfaces of the housing to improve the sealability thereof.

### Brief description of the Drawings

[Fig. 1] A longitudinal section view showing one embodiment of an electric linear actuator;
[Fig. 2 A longitudinal section view showing an actuator main body of Fig. 1;
[Fig. 3(a)] A front elevation view showing a second housing of Fig. 1;
[Fig. 3(b)] A perspective view of Fig. 3(a);
[Fig. 4(a)] A front elevation view showing a modification of the second housing of Fig. 3;
[Fig. 4(b)] A perspective view of Fig. 4(a);
[Fig. 5(a)] A partially enlarged view showing a tip end of the rib of Fig. 4;
[Fig. 5(b)] A partially enlarged view showing a comparative example of Fig. 5(a); and
[Fig. 6] A longitudinal section view showing an electric linear actuator of the prior art.

### Mode for carrying out the Invention

One mode for carrying out the present invention is an electric linear actuator comprising a housing formed of aluminum alloy die-cast; an electric motor mounted on the housing; a speed reduction mechanism for reducing rotational speed of the electric motor via a motor shaft; and a ball screw mechanism for converting rotational motion of the electric motor transmitted via the speed reduction mechanism to axial linear motion of a driving shaft; the ball screw mechanism comprising a nut formed with a helical screw groove on its inner circumference and supported by rolling bearings mounted on the housing rotationally but axially immovably, and a screw shaft coaxially integrated with the driving shaft, formed with a helical screw groove on its outer circumference corresponding to the helical screw groove of the nut, inserted into the nut via a large number of balls, and supported axially movably but not rotationally, that the housing comprises a first housing on which the electric motor is mounted and a second housing to be abutted against an end face of the first housing, that a cylindrical blind bore is formed at abutting area of the first and second housings for containing the screw shaft, that a plurality of partially projected securing portions are formed into which fastening bolts are inserted from the periphery of an abutting surface of the substantially circular housing; that at least one of the first and second housings is formed with ribs extending from each of securing portions arranged on the periphery of the housing through which fastening bolts are inserted to a containing portion (cylindrical portion) for containing the screw shaft; and that the height of each rib arcuately varies from the securing portion toward the containing portion (cylindrical portion) of the housing so that the tangential inclination of the arcuate rib becomes gradually gentle toward the containing portion (cylindrical portion).

### Embodiment

One embodiment and modifications will be hereinafter described with reference to the drawings.

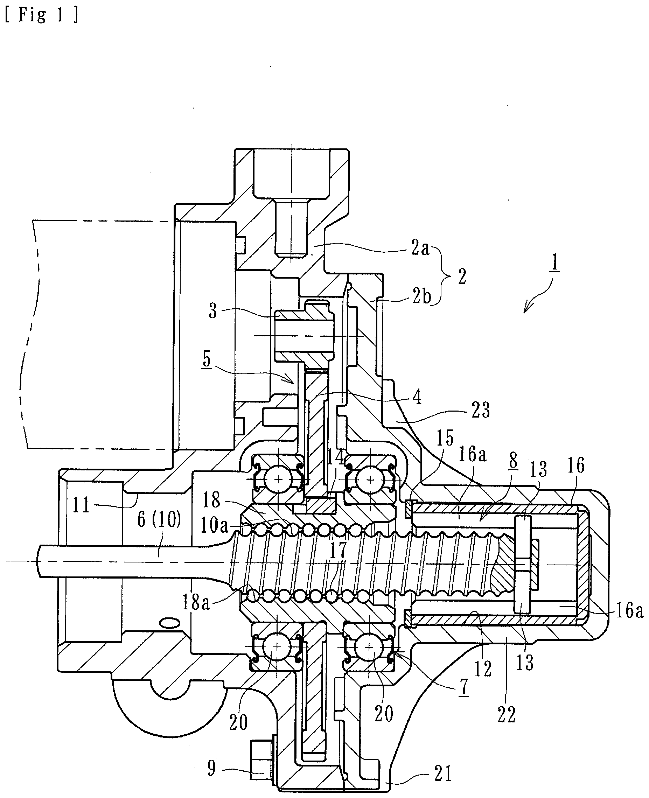

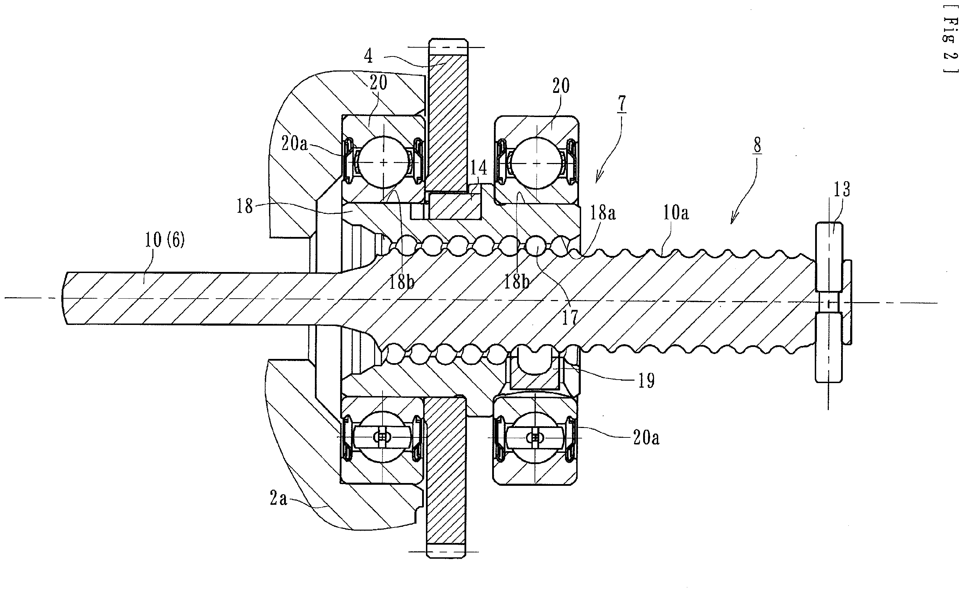

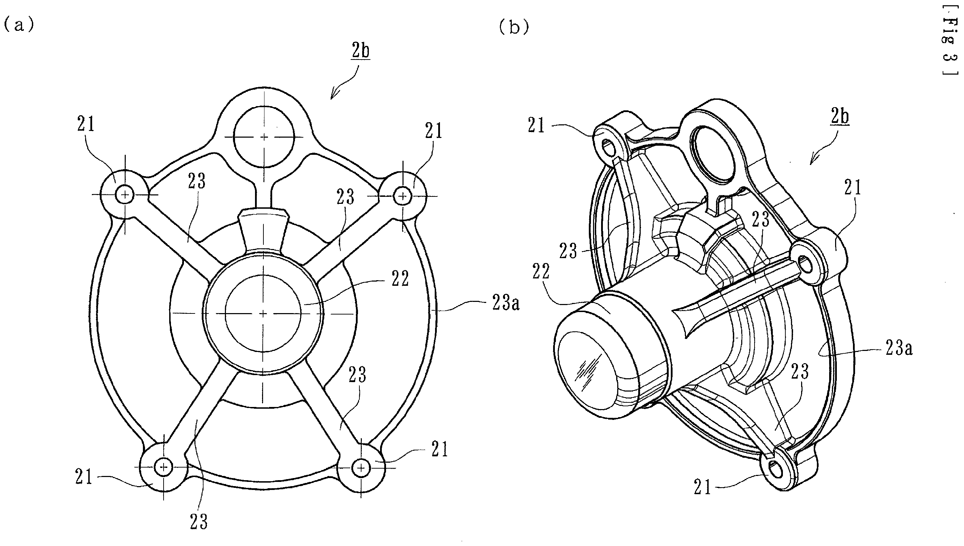

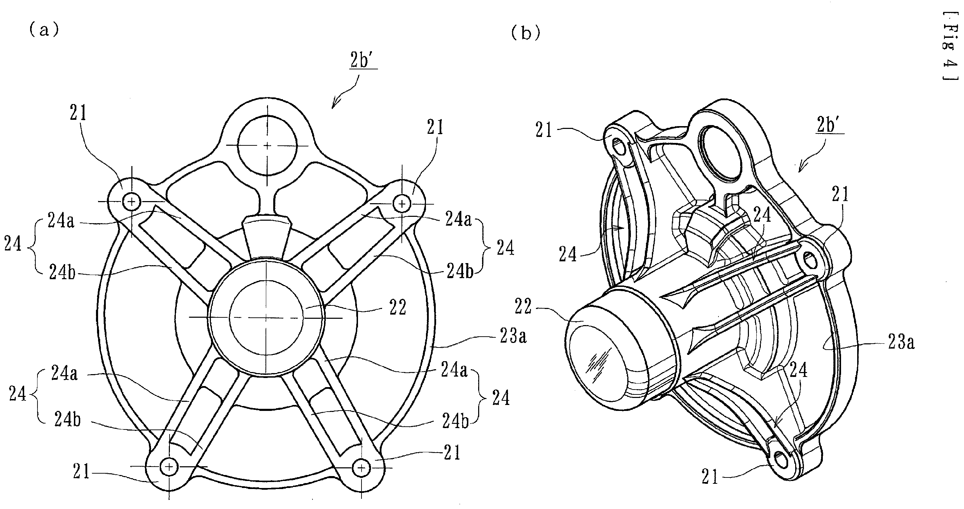

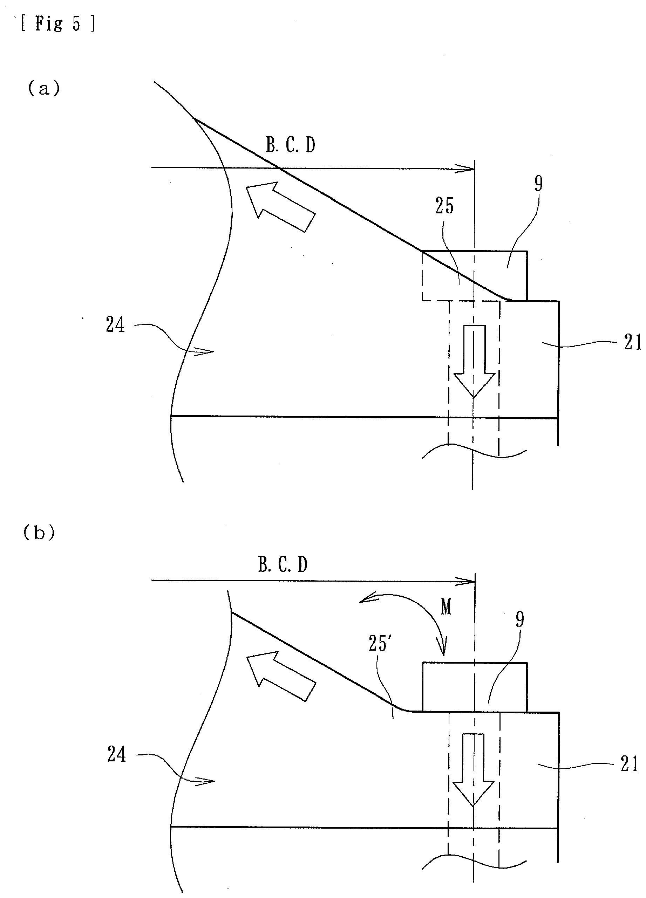

Fig. 1 is a longitudinal section view showing one embodiment of an electric linear actuator; Fig. 2 is a longitudinal section view showing an actuator main body of Fig. 1; Fig. 3(a) is a front elevation view showing a second housing of Fig. 1; Fig. 3(b) is a perspective view of Fig. 3(a); Fig. 4(a) is a front elevation view showing a modification of the second housing of Fig. 3; Fig. 4(b) is a perspective view of Fig. 4(a); Fig. 5(a) is a partially enlarged view showing a tip end of the rib of Fig. 4; and Fig. 5(b) is a partially enlarged view showing a comparative example of Fig. 5(a).

As shown in Fig. 1, the electric linear actuator 1 comprises a housing 2, an electric motor (not shown) mounted on the housing 2, a speed reduction mechanism 5 comprising an input gear 3 mounted on a motor shaft (not shown) of the electric motor and an output gear 4 mating with the input gear 3, a ball screw mechanism 7 for converting rotational motion of the electric motor to axial linear motion of a driving shaft 6, and an actuator main body 8 including the ball screw mechanism 7.

The housing 2 comprises a first housing 2a and a second housing 2b abutted with and integrally fastened each other by fastening bolts 9. The electric motor is mounted on the first housing 2a and blind bores 11, 12 for containing a screw shaft 10 are formed in the first and second housings 2a, 2b respectively.

The housing 2 is formed of aluminum alloy such as A 6061, ADC 12 etc. by die casting. Then the housing 2 is performed by a so-called precipitation hardening treatment comprising a series of heat treatments such as solution heat treatment, for forming solid solution by high temperature heating, quenching treatment by rapidly cooling the solution heat treated housing, then age-hardening treatment (tempering treatment) for precipitation by holding at the room temperature or heating at a low temperature (100∼200°C) to cause large lattice distortion in the precipitated phase. Such a precipitation hardening treatment enables to improve the mass productivity and reduce the manufacturing cost and the weight of the housing 2 with increasing its strength and reducing amount of aluminum consumption.

The input gear 3 is press-fitted onto the end of the motor shaft of the electric motor not rotationally and the output gear 4 mating with the input gear 3 is integrally secured on a nut 18 forming part of the ball screw mechanism 7 via a key 14.

The driving shaft 6 is integrally formed with a screw shaft 10 forming part of the ball screw mechanism 7. Guide pins 13, 13 are mounted on one end (right-side end of Fig. 1) of the driving shaft 6. The pins 13, 13 contact the stopper ring 15 mounted on the second housing 2b to prevent the shaft from falling off. A guide member 16 is mounted in the blind bore 12 of the second housing 2b and is formed with axially extending guide grooves 16a, 16a with which the guide pins 13, 13 are engage so that the screw shaft 10 can axially moved but not rotated. Falling-out of the screw shaft 10 can be prevented by abutment of the pins 13, 13 against a stopper ring 15 mounted on the second housing 2b.

The guide member 16 is formed of sheet or pipe members of blister steel such as SCr 420 or SCM 415 etc. by plastic working them, more particularly by press working pipe members and the surface of the guide member 16 is hardened by carburizing quenching as having its surface hardness of 50∼64 HRC. This makes it possible to prevent wear of the guide member 16 for a long term and thus improve its durability. The guide member 16 can be made of other materials than those described above, for example, of blister steel such as SCM 440, cold rolled steel sheet (JIS SPCC system) or carbon steel such as S45C. When using cold rolled steel or carbon steel, it is preferable that they are high frequency hardened as having their surface of 50∼64 HRC.

As shown in the enlarged view of Fig. 2, the ball screw mechanism 7 comprises the screw shaft 10 and the nut 18 inserted on the screw shaft 10 via balls 17. The screw shaft 10 is formed on its outer circumference with a helical screw groove 10a and supported axially movably but not rotationally. On the other hand, the nut 18 is formed on its inner circumference with screw groove 18a corresponding to the screw groove 10a of the screw shaft 10 and a plurality of balls 17 are rollably contained between the screw grooves 10a, 18a. The nut 18 is supported by two supporting bearings 20, 20 rotationally but axially immovably relative to the housings 2a, 2b. A numeral 19 denotes a bridge member for achieving an endless circulating passage of balls 17 through the screw groove 18a of the nut 18.

The cross-sectional configuration of each screw groove 10a, 18a may be either one of circular-arc or Gothic-arc configuration. However, the Gothic-arc configuration is adopted in this embodiment since it can have a large contacting angle with the ball 17 and set a small axial gap. This enables to have large rigidity against the axial load and thus to suppress generation of vibration.

The nut 18 is formed of case hardened steel such as SCM 415 or SCM 420 and its surface is hardened to HRC 55∼62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM 415 or SCM 420 and its surface is hardened to HRC 55∼62 by induction hardening or carburizing hardening.

The output gear 4 forming part of the speed reduction mechanism 6 is firmly secured on the outer circumference of the nut 18 via a key 14 and the support bearings 20, 20 are press-fitted onto the nut via a predetermined interface at both sides of the output gear 4. This enables to prevent both the supporting bearings 20, 20 and output gear 4 from being axially shifted although strong thrust load would be applied to them from the driving shaft 6. Each supporting bearing 20 comprises a deep groove ball bearing on both sides of which is mounted shield plates 20a, 20a for preventing lubricating grease sealed within the bearing body from being leaked outside and abrasive debris from being entered into the bearing body from outside.

In the illustrated embodiment, since both the supporting bearings 20, 20 supporting the nut 18 in a rotatable manner are formed by deep groove ball bearing having same specifications, it is possible to support both a thrust load applied from the driving shaft 6 and a radial load applied from the output gear 4 and also to simplify confirmation of error in assembly of the bearing and thus to improve the assembling operability. In this case, the term "same specifications" means that the deep groove ball bearings have same inner diameters, outer diameters, rolling element sizes, rolling element numbers and internal clearances.

As shown in the enlarged view of Fig. 3(a), the abutment surfaces of the first and second housings 2a, 2b (only the second housing 2b is shown in Fig. 3) formed inside surfaces of the housings 2a, 2b along their periphery are substantially circular. A plurality (four in the illustrated embodiment) of securing portions 21 are formed on each housing 2a, (2b) along its periphery partially projected radially outward therefrom for receiving fastening bolts 9 (Fig. 1). In addition, at least one of the first and second housings 2a and 2b is formed with ribs 23 extending from each of securing portions 21 to the cylindrical portion (i.e. containing portion) forming the blind bore for containing the screw shaft 10, and is formed with another rib 23a extending along the periphery of each housing 2a and/or 2b.

As shown in Fig. 1, the height of each rib 23 arcuately varies from the securing portion 21 toward the cylindrical portion (containing portion) 22 of the housing 2a and/or 2b so that the tangential inclination of the arcuate rib 23 becomes gradually gentle toward the cylindrical portion (containing portion) 22. This makes it possible to improve the strength and rigidity of the housing 2b with reducing its weight and since the ribs 23 can help to support the load applied to the cylindrical portion (containing portion) 22 which is the most weak portion, it is possible to provide an electric linear actuator which can contribute to safety design of the most weak portion (cylindrical portion) and thus can improve the durability of the electric linear actuator with increasing the strength against the load applied to the most weak portion. In addition, it is possible to prevent deformation of the abutting surfaces of the first and second housings 2a, 2b with increasing the strength and rigidity of the housings 2a, 2b by ribs 23, 23a and thus possible to improve the sealability of the housings 2a, 2b.

Fig. 4 shows a modification of the second housing 2b shown in Fig. 3. This housing 2b' is different from the housing 2b of Fig. 3 basically in structure of the ribs 23, 24 and therefore same reference numerals are used for designating the same parts and thus detail description of them will be omitted.

As shown in Fig. 4(a), the housing 2b' is formed as having a substantially circular configuration. A plurality of the securing portions 21 are formed on each housing 2b along its periphery partially projected radially outward therefrom and ribs 24 are also formed so that they extend from the securing portions 21 to the cylindrical portion (i.e. containing portion) 22. The rib 24 comprises a pair of ribs 24a, 24b each being thinner than the rib 23 of Fig. 3 and the height of each rib 24a, 24b arcuately varies from the securing portion 21 toward the cylindrical portion (containing portion) 22 of the housing 2b' so that the tangential inclination of the arcuate ribs 24a, 24b become gradually gentle toward the cylindrical portion (containing portion) 22 as shown in Fig. 4(b). The thinned ribs 24a, 24b make it possible to prevent generation of air bubbles in a molded body during die casting process and to reduce the weight of the housing without reduce the strength of the housing with and also possible to achieve smooth circulation of mold lubricant during molding and thus to improve the productivity.

Furthermore, the distance between ribs 24a, 24b varies so that it gradually increases toward the cylindrical portion (containing portion) 22. This makes it possible to further improve the strength and rigidity of the housing 2b'.

Further according to the present invention, the radially outermost end (tip end) of each rib 24 is set at a position radially outer than the bolt pitch circle diameter (B.C.D) of the fastening bolts 9 as shown in Fig. 5(a). This makes it possible to suppress stress concentration which would be caused at a tip end 25 of the rib 24 by loads (shown by allows) due to a bending moment M applied to the housing and thus to further improve the durability with increasing the strength and rigidity of the housing.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The electric linear actuator of the present invention can be used to electric motors for a general industry use, driving portions of an automobile etc. and applied to an actuator provided with a ball screw mechanism for converting a rotational input motion from an electric motor to a linear motion of a driving shaft.

### Description of Reference numerals

- 1: electric linear actuator
- 2: housing
- 2a: first housing
- 2b, 2b': second housing
- 3: input gear
- 4: output gear
- 5: speed reduction mechanism
- 6: driving shaft
- 7: ball screw mechanism
- 8: actuator main body
- 9: securing bolt
- 10: screw shaft
- 10a, 18a: screw groove
- 11, 12: blind bore
- 13: guide pin
- 14: key
- 15: stopper ring
- 16: guide member
- 16a: guide groove
- 17: ball
- 18: nut
- 18b: outer circumference of nut
- 19: bridge member
- 20: supporting bearing
- 20a: shield plate
- 21: securing portion
- 22: cylindrical portion
- 23, 23a, 24, 24a, 24b: rib
- 25, 25': tip end of rib
- 50: electric linear actuator
- 51: ball screw
- 52: actuator main body
- 53: electric motor
- 53a: motor shaft
- 54: gear reduction mechanism
- 55: first gear
- 56: position holding mechanism
- 57: screw shaft
- 57a, 58a: screw groove
- 58: nut
- 59: ball
- 60: housing
- 61, 62: ball bearing
- 63: second gear
- 64: shaft
- 65: solenoid
- 66: receiving part
- M: moment load

## Claims

1. An electric linear actuator comprising:
a housing (2);
an electric motor mounted on the housing (2);
a speed reduction mechanism (5) for reducing rotational speed of the electric motor via a motor shaft; and
a ball screw mechanism (7) for converting rotational motion of the electric motor transmitted via the speed reduction mechanism (5) to axial linear motion of a driving shaft (6); the ball screw mechanism (7) comprising a nut (18) formed with a helical screw groove (18a) on its inner circumference and supported by rolling bearings (20) mounted on the housing (2) rotationally but axially immovably, and a screw shaft (10) coaxially integrated with the driving shaft (6), formed with a helical screw groove (10a) on its outer circumference corresponding to the helical screw groove (18a) of the nut (18), inserted into the nut (18) via a large number of balls (17), and supported axially movably but not rotationally, wherein the housing (2) comprises a first housing (2a) on which the electric motor is mounted and a second housing (2b; 2b') to be abutted against an end face of the first housing (2a), wherein at least one (2b; 2b') of the first and second housings is formed with ribs (23; 24) extending from each of securing portions (21) arranged on the periphery of said at least one of the first and second housings and through which fastening bolts (9) are inserted to a containing portion (22) for containing the screw shaft (10),
wherein the securing portions (21) partially project radially outward from the periphery of said at least one of the first and second housings and accommodate the fastening bolts (9), and
wherein the height of each rib (23; 24) arcuately varies from the corresponding securing portion (21) toward the containing portion (22) of said at least one of the first and second housings so that the tangential inclination of the arcuate (23; 24) becomes gradually gentle toward the containing portion (22),
**characterized in that**
the radially outermost end of each rib (23; 24) is set at a position radially outer than the bolt pitch circle diameter (B.C.D) of the fastening bolts (9).

2. An electric linear actuator of claim 1 wherein the housing (2) is formed of aluminum alloy die-cast.

3. An electric linear actuator of any one of claims 1-2 wherein each rib (24) comprises a plurality of thin walled ribs.

4. An electric linear actuator of claim 3 wherein each rib (24) comprises a pair of ribs (24a, 24b) and the distance therebetween varies so that it gradually increases toward the containing portion (22).

5. An electric linear actuator of claim 1 wherein the driving shaft (6) is formed integrally with the screw shaft (10), a radially extending engaging pin (13) is mounted on one end of the driving shaft (6), a guide member (16) having axially extending guide grooves (16a) is mounted within a blind bore (11) of the housing (2), and the engaging pin (13) is engaged with the guide grooves (16a).

## Patentansprüche

1. Elektrischer Linearaktor, umfassend:
ein Gehäuse (2);
einen Elektromotor, der auf dem Gehäuse (2) montiert ist;
einen Drehzahlverminderungsmechanismus (5) zum Vermindern einer Drehzahl des Elektromotors durch eine Motorwelle; und
einen Kugelumlaufspindelmechanismus (7) zum Umwandeln von Drehbewegung des Elektromotors, die durch den Drehzahlverminderungsmechanismus (5) übertragen wird, in axiale Linearbewegung einer Antriebswelle (6); wobei der Kugelumlaufspindelmechanismus (7) eine Mutter (18), die mit einer spiralförmigen Schraubnut (18a) auf ihrem Innenumfang ausgebildet ist und durch Wälzlager (20) getragen wird, die auf dem Gehäuse (2) drehbar, aber axial unbeweglich montiert sind, und eine Schraubenwelle (10) umfasst, die koaxial in die Antriebswelle (6) integriert und mit einer spiralförmigen Schraubnut (10a) auf ihrem Außenumfang ausgebildet ist, die der spiralförmigen Schraubnut (18a) der Mutter (18) entspricht, über eine große Anzahl von Kugeln (17) in die Mutter (18) eingeführt und axial beweglich, aber nicht drehbar getragen wird, wobei das Gehäuse (2) ein erstes Gehäuse (2a), auf dem der Elektromotor montiert ist, und ein zweites Gehäuse (2b; 2b') umfasst, das an einer Endfläche des ersten Gehäuses (2a) anliegt,
wobei wenigstens eines (2b; 2b') des ersten und des zweiten Gehäuses mit Rippen (23; 24) ausgebildet ist, die sich von jedem von Sicherungsabschnitten (21) erstrecken, die auf dem Umfang des wenigstens einen des ersten und des zweiten Gehäuses angeordnet sind und durch die Befestigungsbolzen (9) in einen Aufnahmeabschnitt (22) zum Aufnehmen der Schraubenwelle (10) eingeführt werden,
wobei die Sicherungsabschnitte (21) vom Umfang des wenigstens einen des ersten und des zweiten Gehäuses teilweise radial nach außen vorstehen und die Befestigungsbolzen (9) aufnehmen; und
wobei die Höhe jeder Rippe (23; 24) sich vom entsprechenden Sicherungsabschnitt (21) in Richtung des Aufnahmeabschnitts (22) des wenigstens einen des ersten und des zweiten Gehäuses bogenförmig ändert, so dass die tangentiale Neigung der bogenförmigen Rippe (23; 24) in Richtung des Aufnahmeabschnitts (22) schrittweise flacher wird,
**dadurch gekennzeichnet, dass**
das radial äußerste Ende jeder Rippe (23; 24) in einer Position radial weiter außen als der Bolzenlochkreisdurchmesser der Befestigungsbolzen (9) eingerichtet ist.

2. Elektrischer Linearaktor nach Anspruch 1, wobei das Gehäuse (2) aus Aluminiumlegierungsdruckguss gebildet ist.

3. Elektrischer Linearaktor nach einem der Ansprüche 1 bis 2, wobei jede Rippe (24) eine Vielzahl von dünnwandigen Rippen umfasst.

4. Elektrischer Linearaktor nach Anspruch 3, wobei jede Rippe (24) ein Rippenpaar (24a, 24b) umfasst, und der Abstand dazwischen so variiert, dass er in Richtung des Aufnahmeabschnitts (22) schrittweise zunimmt.

5. Elektrischer Linearaktor nach Anspruch 1, wobei die Antriebswelle (6) einstückig mit der Schraubenwelle (10) ausgebildet ist, ein sich radial erstreckender Eingriffsstift (13) an einem Ende der Antriebswelle (6) montiert ist, ein Führungselement (16) mit axial verlaufenden Führungsnuten (16a) innerhalb einer Blindbohrung (11) des Gehäuses (2) montiert ist, und der Eingriffsstift (13) mit den Führungsnuten (16) in Eingriff gebracht wird.

## Revendications

1. Actionneur linéaire électrique, comprenant :
un boîtier (2) ;
un moteur électrique monté dans le boîtier (2) ;
un mécanisme réducteur de vitesse (5) destiné à réduire la vitesse de rotation du moteur électrique par le biais d'un arbre de moteur ; et
un mécanisme de vis à bille (7) destiné à convertir le mouvement de rotation du moteur électrique transmis par le biais du mécanisme réducteur de vitesse (5) en un mouvement linéaire axial d'un arbre d'entraînement (6) ; le mécanisme de vis à bille (7) comprenant un écrou (18) formé avec un sillon de vis hélicoïdal (18a) sur sa circonférence interne et supporté par des paliers à roulement (20) montés à rotation sur le boîtier (2), mais immobiles dans le sens axial, et une tige filetée (10) intégrée de manière coaxiale avec l'arbre d'entraînement (6), formée avec un sillon de vis hélicoïdal (10a) sur sa circonférence externe, lequel correspond au sillon de vis hélicoïdal (18a) de l'écrou (18), insérée dans l'écrou (18) par le biais d'un grand nombre de billes (17) et supportées avec mobilité axiale, mais non à rotation, le boîtier (2) comprenant un premier logement (2a) sur lequel est monté le moteur électrique et un deuxième logement (2b ; 2b') destiné à venir en butée contre une face d'extrémité du premier logement (2a),
au moins l'un (2b ; 2b) des premier et deuxième logements étant formé avec des nervures (23 ; 24) qui s'étendent depuis chacune de portions de calage (21) disposées sur la périphérie dudit au moins l'un des premier et deuxième logements et à travers lesquelles des boulons de serrage (9) sont insérés vers une portion contenante (22) destinée à contenir la tige filetée (10),
les portions de calage (21) se projetant partiellement dans le sens radial vers l'extérieur depuis la périphérie dudit au moins l'un des premier et deuxième logements et accueillant les boulons de serrage (9), et
la hauteur de chaque nervure (23 ; 24) variant en forme d'arc de la portion de calage (21) correspondante vers la portion contenante (22) dudit au moins l'un des premier et deuxième logements, de sorte que l'inclinaison tangentielle de la nervure (23 ; 24) en forme d'arc devient graduellement modérée en direction de la portion contenante (22),
**caractérisé en ce que**
l'extrémité la plus à l'extérieur dans le sens radial de chaque nervure (23 ; 24) est fixée à une position plus à l'extérieur dans le sens radial que le diamètre du cercle primitif de boulon (B.C.D) des boulons de fixation (9).

2. Actionneur linéaire électrique selon la revendication 1, le boîtier (2) étant formé d'alliage d'aluminium moulé sous pression.

3. Actionneur linéaire électrique selon l'une quelconque des revendications 1 et 2, chaque nervure (24) comprenant une pluralité de nervures à paroi mince.

4. Actionneur linéaire électrique selon la revendication 3, chaque nervure (24) comprenant une paire de nervures (24a, 24b) et la distance entre elles variant de telle sorte qu'elle augmente graduellement vers la portion contenante (22).

5. Actionneur linéaire électrique selon la revendication 1, l'arbre d'entraînement (6) étant formé d'un seul tenant avec la tige filetée (10), une clavette d'accouplement (13) qui s'étend dans le sens radial étant montée à une extrémité de l'arbre d'entraînement (6), un élément de guidage (16) pourvu de rainures de guidage (16a) qui s'étendent dans le sens axial étant monté à l'intérieur d'un alésage borgne (11) du boîtier (2) et la clavette d'accouplement (13) étant accouplée avec les rainures de guidage (16a).
